# EUROPÄISCHE PATENTSCHRIFT

(11) **EP 4 448 340 B1**
(45) Veröffentlichungstag und Bekanntmachung des Hinweises auf die Patenterteilung: **28.10.2026**
(21) Anmeldenummer: 22818269.7
(22) Anmeldetag: 15.11.2022
(51) Int. Cl.: B60R 21/0136, G01L 1/20, G01L 5/00

(54) **VORRICHTUNG ZUR ERKENNUNG UND LOKALISIERUNG EINER KOLLISION, VERFAHREN ZUM BETRIEB DERSELBEN SOWIE KRAFTFAHRZEUG DIESE ENTHALTEND**
DEVICE FOR IDENTIFYING AND LOCATING A COLLISION, METHOD FOR OPERATING SAME AND MOTOR VEHICLE CONTAINING SAME
DISPOSITIF D'IDENTIFICATION ET DE LOCALISATION D'UNE COLLISION, SON PROCÉDÉ DE FONCTIONNEMENT ET VÉHICULE À MOTEUR LE CONTENANT

(30) Priorität: 16.12.2021 DE 102021214553
(43) Veröffentlichungstag der Anmeldung: 23.10.2024
(73) Patentinhaber: Robert Bosch GmbH, 70442 Stuttgart (DE)
(72) Erfinder: VASU, Suvin, 70806 Kornwestheim (DE)
(86) Internationale Anmeldenummer: PCT/EP2022/081931
(87) Internationale Veröffentlichungsnummer: WO 2023/110259

(56) Entgegenhaltungen:
- EP-B1- 2 794 359
- CN-A- 105 128 796
- DE-A1- 10 320 047
- DE-A1- 102005 018 568
- DE-A1- 102012 008 974
- US-A1- 2008 100 046

## Beschreibung

Die vorliegende Erfindung betrifft eine Vorrichtung zur Erkennung und Lokalisierung einer Kollision eines Kraftfahrzeugs mit einem externen Objekt, ein Verfahren zum Betrieb derselben und ein Kraftfahrzeug diese enthaltend gemäß dem Oberbegriff der unabhängigen Patentansprüche.

### Stand der Technik

Aus dem Dokument CN105128796A ist ein Rückkopplungssystem zur Überwachung einer Kollision eines Kraftfahrzeugs bekannt, wobei das Rückkopplungssystem zumindest einen Kraftsensor umfasst.

Aus dem Dokument DE102012008974 A1 ist ein Kraftfahrzeug bekannt, wobei das Kraftfahrzeug zumindest ein Sensormittel zur Erfassung einer Kollision des Kraftfahrzeugs mit einem Drittgegenstand umfasst. Das zumindest eine Sensormittel ist hierbei in Form eines sich über einen Flächenbereich erstreckenden Gitters aus wenigstens einer stromführenden Leitung ausgebildet, dem eine Erfassungseinrichtung zugeordnet ist, die anhand einer Veränderung des Stromflusses infolge einer kollisionsbedingten Leitungsdeformation eine Kollision erkennt.

EP 2 794 359 B1 offenbart ein Fahrzeug mit Fussgängeraufprallsensoranordnung.

### Offenbarung der Erfindung

Gemäß der vorliegenden Erfindung wird eine Vorrichtung zur Erkennung und Lokalisierung einer Kollision eines Kraftfahrzeugs mit einem externen Objekt mit den kennzeichnenden Merkmalen der unabhängigen Patentansprüche bereitgestellt.

Die erfindungsgemäße Vorrichtung umfasst eine Erfassungseinheit, die dazu ausgelegt ist, eine Änderung eines elektrischen Widerstands zumindest eines Bereiches der Erfassungseinheit infolge der Kollision zu erfassen.

Mittels der erfindungsgemäßen Vorrichtung wird eine Kollision detektiert und deren Auftrittsort an einem Kraftfahrzeug bestimmt. Auf Basis dieser kollisionsrelevanten Informationen wird im Fall einer sicherheitskritischen Kollision beispielsweise ein Airbag ausgelöst, um z.B. die Insassen zu schützen.

Im Fall einer unkritischen Kollision wird beispielsweise ein unnötiges Auslösen des Airbags vermieden. Demgegenüber wird der Fahrer des Kraftfahrzeugs über die unkritische Kollision bspw. informiert, sodass der Fahrer z.B. eine Werkstatt aussuchen kann. Dabei muss jedoch in der Werkstatt nicht mehr lange untersucht werden, wo die Kollision aufgetreten ist.

Weitere vorteilhafte Ausführungsformen der vorliegenden Erfindung sind Gegenstand der Unteransprüche.

So ist es von Vorteil, wenn die Erfassungseinheit rohrförmig ausgebildet ist.

Die rohrförmig ausgebildete Erfassungseinheit kann je nach Anforderungen beliebig lang ausgestaltet werden, sodass ein größerer Bereich eines Kraftfahrzeugs von der rohrförmig ausgebildeten Erfassungseinheit abgedeckt wird. Auf diese Weise wird die Anzahl der benötigten Erfassungseinheiten reduziert, um eine Kollision zu erkennen und zu lokalisieren.

Erfindungsgemäß ist die Erfassungseinheit mit einer Messeinheit elektronisch gekoppelt, die einen Signalgenerator zum Generieren und Senden eines ersten Signals an die Erfassungseinheit und einen Signalempfänger zum Empfangen eines zweiten Signals von der Erfassungseinheit aufweist.

Die Messeinheit ist beispielsweise an einem Ende der z.B. rohrförmig ausgebildeten Erfassungseinheit elektronisch angeschlossen, während das andere Ende der rohrförmig ausgebildeten Erfassungseinheit beispielsweise mit der Messeinheit elektrisch verbunden ist, sodass die Erfassungseinheit mit dem Innenwiderstand der Messeinheit als Last belastet wird.

Weiterhin ist es vorteilhaft, wenn die Messeinheit dazu ausgelegt ist, ein Verhältnis zwischen dem ersten und dem zweiten Signal entlang der Erfassungseinheit zu berechnen.

Durch das Berechnen des Verhältnisses zwischen dem ersten und dem zweiten Signal wird eine Kollision ohne kostspielige visuelle Sensoren erkannt. Sollte das Verhältnis einen Wert von größer als eins aufweisen, dann liegt eine Kollision vor. Dabei ist das Verhältnis beispielsweise ein Stehwellenverhältnis, welches die Übereinstimmung des Leitungswellenwiderstands der z.B. rohrförmig ausgebildeten Erfassungseinheit mit dem Lastwiderstand derselben repräsentiert.

Gemäß einem weiteren Aspekt der vorliegenden Erfindung wird ein Verfahren zur Erkennung und Lokalisierung einer Kollision eines Kraftfahrzeugs mit einem externen Objekt mittels einer erfindungsgemäßen Vorrichtung mit einer Erfassungseinheit und einer Messeinheit bereitgestellt.

Bei dem erfindungsgemäßen Verfahren wird eine Änderung eines elektrischen Widerstands zumindest eines Bereiches der Erfassungseinheit infolge einer Kollision von der Erfassungseinheit erfasst.

Vorteilhaft ist es, wenn ein erstes Signal von der Messeinheit an die Erfassungseinheit gesandt wird und ein zweites Signal von der Erfassungseinheit an die Messeinheit gesandt wird und wenn eine Änderung eines elektrischen Widerstands zumindest eines Bereiches der Erfassungseinheit von derselben erfasst wird.

Weiter ist es vorteilhaft, wenn der Auftrittsort der Kollision an dem Kraftfahrzeug unter Berücksichtigung zumindest der Länge der Erfassungseinheit, die rohrförmig ausgebildet ist, und der zeitlichen Dauer, bis das zweite Signal von der Messeinheit empfangen ist, von der Messeinheit ermittelt wird.

Erfindungsgemäß wird die Stärke der Kollision auf Basis eines Verhältnisses zwischen dem ersten und dem zweiten Signal von der Messeinheit ermittelt.

Gemäß einem dritten Aspekt der vorliegenden Erfindung wird ein Kraftfahrzeug bereitgestellt.

Das erfindungsgemäße Kraftfahrzeug umfasst eine vorbeschriebene Vorrichtung zur Erkennung und Lokalisierung einer Kollision eines Kraftfahrzeugs mit einem externen Objekt. Dabei ist vorgesehen, dass eine Erfassungseinheit der Vorrichtung in einem Innenbereich des Kraftfahrzeugs angeordnet ist, wo an dessen Außenbereich eine Kollision des Kraftfahrzeugs mit einem externen Objekt zu erwarten ist.

### Kurze Beschreibung der Figuren

In der Zeichnung sind vorteilhafte Ausführungsformen der vorliegenden Erfindung dargestellt und in der nachfolgenden Figurenbeschreibung näher erläutert. Es zeigt:
- Figur 1: eine beispielhafte Draufsicht auf ein Kraftfahrzeug gemäß einer Ausführungsform der vorliegenden Erfindung und
- Figur 2: ein beispielhaftes Ablaufdiagramm eines Verfahrens zur Erkennung und Lokalisierung einer Kollision eines Kraftfahrzeugs mit einem externen Objekt gemäß einer Ausführungsform der vorliegenden Erfindung.

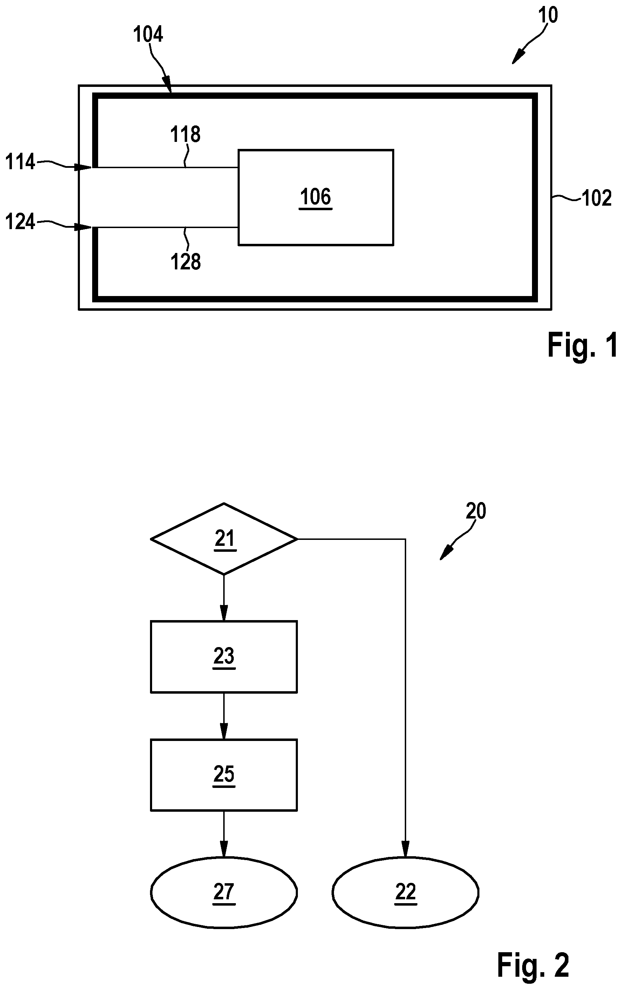

In Figur 1 ist eine Draufsicht auf ein Kraftfahrzeug 10 mit einer Erfassungseinheit 104 und einer Messeinheit 106 gemäß einer Ausführungsform der vorliegenden Erfindung dargestellt.

Das Kraftfahrzeug 10 umfasst beispielsweise eine Karosserie 102, innerhalb und entlang deren Innenbereich die Erfassungseinheit 104 z.B. angebracht ist. Die Erfassungseinheit 104 ist beispielsweise als Koaxialkabel ausgebildet, welches ein erstes und ein zweites Ende 114, 124 aufweist. Das erste Ende 114 der Erfassungseinheit 104 ist beispielsweise mit einem ersten Anschluss 118 der Messeinheit 106 elektronisch verbunden, während das zweite Ende 124 der Erfassungseinheit 104 beispielsweise mit einem zweiten Anschluss 128 elektrisch verbunden ist. Die Messeinheit 106 umfasst hierbei beispielsweise einen Signalsender und einen Signalempfänger.

Der Signalsender der Messeinheit 106 dient beispielsweise dazu, ein erstes Signal an die Erfassungseinheit 104 zu senden, wobei das erste Signal in Form eines ersten Spannungspulses U₁ vorliegt und die Erfassungseinheit 104 von derem ersten Ende 114 bis zu derem zweiten Ende 124 durchläuft. Demgegenüber dient der Signalempfänger der Messeinheit 106 beispielsweise dazu, ein zweites Signal der Erfassungseinheit 104 zu erfassen, wobei das zweite Signal in Form eines zweiten Spannungspulses U₂ vorliegt und die Erfassungseinheit 104 von derem zweiten Ende 124 bis zu derem ersten Ende 114 durchläuft.

Das zweite Signal in Form des zweiten Spannungspulses U₂ liegt hierbei nur vor, wenn eine Änderung eines elektrischen Widerstands eines Abschnittes der Erfassungseinheit 104 durch eine Kollision verursacht worden ist.

Liegt das zweite Signal in Form des zweiten Spannungspulses U₂ vor, wird ein Stehwellenverhältnis SWV zwischen dem ersten Signal in Form des ersten Spannungspulses U₁ und dem zweiten Signal in Form des zweiten Spannungspulses U₂ z.B. gemäß der folgenden Gleichung berechnet: $SWV = \frac{\left|{U}_{1}\right| + \left|{U}_{2}\right|}{\left|{U}_{1}\right| - \left|{U}_{2}\right|} .$ (1)

Dabei wird der jeweilige Absolutwert |U₁|, |U₂| des ersten und des zweiten Spannungspulses U₁, U₂ berücksichtigt. Wenn das Stehwellenverhältnis SWV einen Wert von größer als eins aufweist, liegt eine Kollision des Kraftfahrzeugs 10 mit einem externen Objekt wie z.B. einem stehenden weiteren Kraftfahrzeug vor. Je größer das Stehwellenverhältnis SWV ist, desto stärker ist beispielsweise die Kollision des Kraftfahrzeugs 10.

Die Lokalisierung der Kollision am Kraftfahrzeug 10 wird beispielsweise mittels eines digitalen Signalprozessors der Messeinheit 106 ermittelt. Dabei wird beispielsweise der Zeitraum beginnend mit dem Senden des ersten Signals in Form des ersten Spannungspulses U₁ bis zum Empfangen des zweiten Signals in Form des zweiten Spannungspulses U₂ berücksichtigt. Weiter berücksichtigt werden beispielsweise die Länge der Erfassungseinheit 104 und die jeweilige Wellenlänge des ersten und des zweiten Spannungspulses U₁, U₂. Somit wird ermittelt, von wo aus innerhalb der Erfassungseinheit 104 das zweite Signal in Form des zweiten Spannungspulses U₂ an die Messeinheit 106 gesandt wird. Dieser Auftrittsort des zweiten Signals in Form des zweiten Spannungspulses U₂ in der Erfassungseinheit 104 entspricht einem Außenbereich am Kraftfahrzeug 10 auf, an dem die Kollision verursacht wurde.

In Figur 2 ist ein beispielhaftes Ablaufdiagramm eines Verfahrens 20 zur Erkennung und Lokalisierung einer Kollision eines Kraftfahrzeugs, beispielsweise eines Kraftfahrzeugs 10 gemäß Figur 1, mit einem externen Objekt gemäß einer Ausführungsform der vorliegenden Erfindung dargestellt. Es bezeichnen gleiche Bezugszeichen gleiche Bauteilkomponenten wie in Figur 1.

In einem ersten Verfahrensschritt 21 wird ermittelt, ob ein zweites Signal in Form eines zweiten Spannungspulses U₂ vorliegt. Wird kein zweites Signal in Form des zweiten Spannungspulses U₂ von dem Signalempfänger der Messeinheit 106 empfangen, so wird in einem ersten Abschlussverfahrensschritt 22 festgestellt, dass keine Kollision des Kraftfahrzeugs 10 aufgetreten ist.

Liegt das zweite Signal in Form des zweiten Spannungspulses U₂ vor, wird in einem zweiten Verfahrensschritt 23 das Stehwellenverhältnis SWV gemäß Gleichung (1) berechnet. Weist das Stehwellenverhältnis SWV einen Wert von größer als eins auf, wird in einem dritten Verfahrensschritt 25 eine Kollision erkannt und der Auftrittsort der Kollision unter Berücksichtigung zumindest der Länge der Erfassungseinheit 104 und der zeitlichen Dauer, bis das zweite Signal in Form des zweiten Spannungspulses U₂ von dem Signalempfänger der Messeinheit 106 empfangen ist, ermittelt. Weiter wird in dem dritten Verfahrensschritt 25 beispielsweise die Amplitude des zweiten Signals in Form des zweiten Spannungspulses U₂ z.B. von dem Signalempfänger der Messeinheit 106 erfasst. Je größer die Amplitude des zweiten Spannungspulses U₂ ist, desto stärker ist die Kollision des Kraftfahrzeugs 10. Abhängig von der Stärke der Kollision wird in einem zweiten Abschlussverfahrensschritt 27 beispielsweise dem Fahrer des Kraftfahrzeugs 10 die Informationen über die Kollision auf einem in dem Kraftfahrzeug 10 eingebauten Bildschirm angezeigt.

## Patentansprüche

1. Vorrichtung zur Erkennung und Lokalisierung einer Kollision eines Kraftfahrzeugs (10) mit einem externen Objekt, umfassend
eine Erfassungseinheit (104) mit einem ersten Ende (114) und einem zweiten Ende (124),
wobei die Erfassungseinheit (104) mit einer Messeinheit (106) elektronisch gekoppelt ist,
wobei die Messeinheit (106)
• einen Signalgenerator zum Generieren und Senden eines ersten Signals in Form eines ersten Spannungspulses U₁ zum Durchlaufen der Erfassungseinheit (104) von dem ersten Ende (114) bis zu dem zweiten Ende (124) der Erfassungseinheit (104) aufweist, und
• einen Signalempfänger zum Empfangen eines zweiten Signals aufweist, das in Form eines zweiten Spannungspulses (U₂) vorliegt.
**dadurch gekennzeichnet, dass**
das zweite Signal (U2) nur dann vorliegt und die Erfassungseinheit (104) von dem zweiten Ende (124) bis zu dem ersten Ende (114) durchläuft, wenn aufgrund einer Kollision eine Änderung eines elektrischen Widerstands zumindest eines Bereiches der Erfassungseinheit (104) verursacht worden ist, und
die Messeinheit (106) dazu ausgelegt ist, ein Verhältnis (SWV) zwischen dem ersten und dem zweiten Signal (U₁, U₂) zu berechnen, wobei vorgesehen ist, dass die Erfassungseinheit (104) die Stärke der Kollision in Abhängigkeit von der Größe des Verhältnisses (SWV) erkennt.

2. Vorrichtung nach Anspruch 1,
**dadurch gekennzeichnet, dass**
die Erfassungseinheit (104) rohrförmig ausgebildet ist.

3. Vorrichtung nach Anspruch 1 oder 2,
**dadurch gekennzeichnet, dass**
die Messeinheit (106) die Lokalisierung der Kollision mittels eines digitalen Signalprozessors der Messeinheit (106) (Seite 6, Zeile 10 ff.) ermittelt, indem der Zeitraum beginnend mit dem Senden des ersten Signals bis zum Empfangen des zweiten Signals berücksichtigt wird.

4. Vorrichtung nach Anspruch 1, **dadurch gekennzeichnet, dass** die Messeinheit (106) als Verhältnis (SWV) ein Stehwellenverhältnis gemäß $SWV = \frac{\left|{U}_{1}\right| + \left|{U}_{2}\right|}{\left|{U}_{1}\right| - \left|{U}_{2}\right|}$ bildet.

5. Verfahren zur Erkennung und Lokalisierung einer Kollision eines Kraftfahrzeugs (10) mit einem externen Objekt, mittels einer Vorrichtung mit einer Erfassungseinheit (104) und einer Messeinheit (106) nach einem der Ansprüche 1 bis 4,
wobei die Erfassungseinheit (104) ein erstes Ende (114) und ein zweites Ende (124) aufweist, und
das Verfahren
• ein erstes Signals in Form eines ersten Spannungspulses U₁ zum Durchlaufen der Erfassungseinheit (104) von dem ersten Ende (114) bis zu dem zweiten Ende (124) der Erfassungseinheit (104) erzeugt, und
• ein zweites Signal erfasst, das in Form eines zweiten Spannungspulses (U₂) nur dann vorliegt (Seite 5, Zeile 26 bis 28) und die Erfassungseinheit (104) von dem zweiten Ende (124) bis zu dem ersten Ende (114) durchläuft, wenn aufgrund einer Kollision eine Änderung eines elektrischen Widerstands zumindest eines Bereiches der Erfassungseinheit (104) verursacht worden ist.
• ein Verhältnis (SWV) zwischen dem ersten und dem zweiten Signal (U₁, U₂) zu berechnen (Anpassung an geänderten Anspruch 1) und
• die Stärke der Kollision in Abhängigkeit des Stehwellenverhältnisses ermittelt .

6. Verfahren nach Anspruch 5,
**dadurch gekennzeichnet, dass**
der Auftrittsort der Kollision an dem Kraftfahrzeug (10) unter Berücksichtigung zumindest der Länge der Erfassungseinheit (104), die rohrförmig ausgebildet ist, und der zeitlichen Dauer, bis das zweite Signal (U₂) von der Messeinheit (106) empfangen ist, von der Messeinheit (106) ermittelt wird.

7. Verfahren nach Anspruch 5 oder 6 **dadurch gekennzeichnet, dass** das Verfahren als Verhältnis (SWV) ein Stehwellenverhältnis gemäß $SWV = \frac{\left|{U}_{1}\right| + \left|{U}_{2}\right|}{\left|{U}_{1}\right| - \left|{U}_{2}\right|}$ bildet.

8. Kraftfahrzeug, umfassend eine Vorrichtung nach einem der Ansprüche 1 bis 4, **dadurch gekennzeichnet, dass**
eine Erfassungseinheit (104) der Vorrichtung in einem Innenbereich des Kraftfahrzeugs (10) angeordnet ist, wo an dessen Außenbereich eine Kollision des Kraftfahrzeugs (10) mit einem externen Objekt zu erwarten ist.

## Claims

1. Device for identifying and locating a collision between a motor vehicle (10) and an external object, comprising
a detection unit (104) having a first end (114) and a second end (124), wherein the detection unit (104) is electronically coupled to a measuring unit (106),
wherein the measuring unit (106) has
• a signal generator for generating and transmitting a first signal in the form of a first voltage pulse U₁ for passing through the detection unit (104) from the first end (114) to the second end (124) of the detection unit (104), and
• a signal receiver for receiving a second signal which is present in the form of a second voltage pulse (U₂),
**characterized in that**
the second signal (U2) is present and passes through the detection unit (104) from the second end (124) to the first end (114) only if a change in an electrical resistance of at least one region of the detection unit (104) has been caused by a collision, and
the measuring unit (106) is designed to calculate a ratio (SWV) between the first and the second signal (U₁, U₂), wherein provision is made for the detection unit (104) to identify the severity of the collision on the basis of the size of the ratio (SWV).

2. Device according to Claim 1,
**characterized in that**
the detection unit (104) is tubular.

3. Device according to Claim 1 or 2,
**characterized in that**
the measuring unit (106) determines the location of the collision by means of a digital signal processor of the measuring unit (106) (page 6, line 10 ff.) by taking into account the time period beginning with the transmission of the first signal until the reception of the second signal.

4. Device according to Claim 1, **characterized in that** the measuring unit (106) forms, as a ratio (SWV), a standing wave ratio according to $SWV = \frac{\left|{U}_{1}\right| + \left|{U}_{2}\right|}{\left|{U}_{1}\right| - \left|{U}_{2}\right|}$

5. Method for identifying and locating a collision between a motor vehicle (10) and an external object by means of a device having a detection unit (104) and a measuring unit (106) according to one of Claims 1 to 4,
wherein the detection unit (104) has a first end (114) and a second end (124), and
the method
• generates a first signal in the form of a first voltage pulse U₁ for passing through the detection unit (104) from the first end (114) to the second end (124) of the detection unit (104), and
• detects a second signal which is present in the form of a second voltage pulse (U₂) (page 5, lines 26 to 28) and passes through the detection unit (104) from the second end (124) to the first end (114) only if a change in an electrical resistance of at least one region of the detection unit (104) has been caused by a collision,
• calculates a ratio (SWV) between the first and the second signal (U₁, U₂) (adaptation to amended Claim 1), and
• determines the severity of the collision on the basis of the standing wave ratio.

6. Method according to Claim 5,
**characterized in that**
the location at which the collision occurs on the motor vehicle (10), taking into account at least the length of the detection unit (104) which is tubular,
and the period of time until the second signal (U₂) has been received by the measuring unit (106) are determined by the measuring unit (106).

7. Method according to Claim 5 or 6, **characterized in that** the method forms, as
a ratio (SWV), a standing wave ratio according to $SWV = \frac{\left|{U}_{1}\right| + \left|{U}_{2}\right|}{\left|{U}_{1}\right| - \left|{U}_{2}\right|}$

8. Motor vehicle comprising a device according to one of Claims 1 to 4, **characterized in that**
a detection unit (104) of the device is arranged in an interior area of the motor vehicle (10), where a collision between the motor vehicle (10) and an external object is to be expected on its exterior area.

## Revendications

1. Dispositif d'identification et de localisation d'une collision d'un véhicule à moteur (10) avec un objet externe, comprenant
une unité de détection (104) ayant une première extrémité (114) et une seconde extrémité (124),
dans lequel l'unité de détection (104) est couplée électroniquement à une unité de mesure (106),
dans lequel l'unité de mesure (106) comporte
• un générateur de signal pour générer et émettre un premier signal sous la forme d'une première impulsion de tension U₁ destinée à traverser l'unité de détection (104) de la première extrémité (114) à la seconde extrémité (124) de l'unité de détection (104), et
• un récepteur de signal pour recevoir un second signal qui se présente sous la forme d'une seconde impulsion de tension (U₂).
**caractérisé en ce que**
le second signal (U2) n'est présent et ne traverse l'unité de détection (104) de la seconde extrémité (124) à la première extrémité (114) que si une modification d'une résistance électrique d'au moins une région de l'unité de détection (104) a été provoquée par une collision, et
l'unité de mesure (106) est configurée pour calculer un rapport (SWV) entre le premier et le second signal (U₁, U₂), l'unité de détection (104) étant conçue pour identifier l'intensité de la collision en fonction de la grandeur du rapport (SWV).

2. Dispositif selon la revendication 1,
**caractérisé en ce que**
l'unité de détection (104) est réalisée sous forme tubulaire.

3. Dispositif selon la revendication 1 ou 2,
**caractérisé en ce que**
l'unité de mesure (106) détermine la localisation de la collision au moyen d'un processeur de signal numérique de l'unité de mesure (106) (page 6, lignes 10 et suivantes) en tenant compte de l'intervalle de temps débutant avec l'émission du premier signal jusqu'à la réception du second signal.

4. Dispositif selon la revendication 1, **caractérisé en ce que** l'unité de mesure (106) calcule en tant que rapport (SWV) un rapport d'ondes stationnaires selon $SWV = \frac{\left|{U}_{1}\right| + \left|{U}_{2}\right|}{\left|{U}_{1}\right| - \left|{U}_{2}\right|}$

5. Procédé d'identification et de localisation d'une collision d'un véhicule à moteur (10) avec un objet externe au moyen d'un dispositif comportant une unité de détection (104) et une unité de mesure (106) selon l'une des revendications 1 à 4,
dans lequel l'unité de détection (104) comporte une première extrémité (114) et une seconde extrémité (124), et
le procédé
• génère un premier signal sous la forme d'une première impulsion de tension U₁ destinée à traverser l'unité de détection (104) de la première extrémité (114) à la seconde extrémité (124) de l'unité de détection (104), et
• détecte un second signal qui n'est présent sous la forme d'une seconde impulsion de tension (U2) (page 5, lignes 26 à 28) et ne traverse l'unité de détection (104) de la seconde extrémité (124) à la première extrémité (114) que si une modification d'une résistance électrique d'au moins une région de l'unité de détection (104) a été provoquée par une collision,
• calcule un rapport (SWV) entre le premier et le second signal (U₁, U₂) (adaptation à la revendication 1 modifiée), et
• détermine l'intensité de la collision en fonction du rapport d'ondes stationnaires.

6. Procédé selon la revendication 5,
**caractérisé en ce que**
le point d'apparition de la collision sur le véhicule à moteur (10) est déterminé par l'unité de mesure (106) en tenant compte d'au moins la longueur de l'unité de détection (104), qui est réalisée sous forme tubulaire,
et de la durée temporelle jusqu'à ce que le second signal (U₂) soit reçu par l'unité de mesure (106).

7. Procédé selon la revendication 5 ou 6, **caractérisé en ce que** le procédé calcule en tant que rapport (SWV) un rapport d'ondes stationnaires selon $SWV = \frac{\left|{U}_{1}\right| + \left|{U}_{2}\right|}{\left|{U}_{1}\right| - \left|{U}_{2}\right|}$ .

8. Véhicule à moteur comprenant un dispositif selon l'une des revendications 1 à 4,
**caractérisé en ce que**
une unité de détection (104) du dispositif est disposée dans une région intérieure du véhicule à moteur (10), où, au niveau de sa région extérieure, une collision du véhicule à moteur (10) avec un objet externe est à prévoir.
